# EUROPÄISCHE PATENTSCHRIFT

(11) **EP 1 949 056 B1**
(45) Veröffentlichungstag und Bekanntmachung des Hinweises auf die Patenterteilung: **01.05.2013**
(21) Anmeldenummer: 06793859.7
(22) Anmeldetag: 27.09.2006
(51) Int. Cl.: G01K 11/20, C25D 15/00, F01D 5/28, F01D 17/08, G01K 11/06, B82Y 30/00, G01K 11/12

(54) **SUBSTRAT MIT AUFGEBRACHTER BESCHICHTUNG UND HERSTELLUNGSVERFAHREN**
SUBSTRATE WITH A COATING AND ITS PRODUCTION PROCESS
SUBSTRAT PRESENTANT UN REVETEMENT APPLIQUE ET SON PROCEDE DE PRODUCTION

(30) Priorität: 29.09.2005 DE 102005047739
(43) Veröffentlichungstag der Anmeldung: 30.07.2008
(73) Patentinhaber: Siemens Aktiengesellschaft, 80333 München (DE)
(72) Erfinder: JABADO, Rene, 14199 Berlin (DE); JENSEN, Jens Dahl, 14050 Berlin (DE); KRÜGER, Ursus, 14089 Berlin (DE); KÖRTVELYESSY, Daniel, 13469 Berlin (DE); LÜTHEN, Volkmar, 12157 Berlin (DE); REICHE, Ralph, 13465 Berlin (DE); RINDLER, Michael, 15566 Schöneiche (DE); ULLRICH, Raymond, 14621 Schönwalde (DE)
(86) Internationale Anmeldenummer: PCT/EP2006/066795
(87) Internationale Veröffentlichungsnummer: WO 2007/036538

(56) Entgegenhaltungen:
- EP-A- 1 645 538
- EP-A1- 0 297 982
- EP-A2- 0 898 158
- DE-A1- 2 534 668
- DE-A1- 19 537 999
- US-A1- 2005 169 348

## Beschreibung

Die Erfindung betrifft ein Substrat mit einer aufgebrachten Beschichtung sowie ein Herstellungsverfahren.

Die vorliegende Erfindung betrifft ganz allgemein Turbinensysteme. Obgleich grundsätzlich auf beliebige Turbinensysteme anwendbar, wird die der Erfindung zugrunde liegende Problematik nachfolgend mit Bezug auf Gas- und Dampfturbinen (GuD) insbesondere für Kraftwerke zur Energiegewinnung erklärt.

Gas- und Dampfturbinenenergiesysteme verwenden ein Medium, beispielsweise Wasser, dessen Siedepunkt und Wärmekapazität den Betriebstemperaturen des Systems angemessen ist. Dieses Medium wird im Allgemeinen in einer gesonderten Wärmequelle, beispielsweise einem Dampferzeuger mittels gebündelter Sonnenstrahlung, Verbrennens fossilen Brennstoffs, etc. erhitzt.

Bei Gas- und Dampfturbinen wird die Verbrennung von fossilen, gasförmigen Brennstoffen direkt in einer Turbine genutzt, um eine Gasturbine in Drehung zu versetzen. Die bei der Verbrennung frei werdende thermische Energie wird anschließend als Wärmequelle zur Dampferzeugung verwendet, der wie oben erwähnt, eine Dampfturbine antreiben kann. Diese Kopplung von Gas- und Dampfturbine ermöglicht im Vergleich zu herkömmlichen Dampfturbinen einen sehr hohen Wirkungsgrad.

Um einen möglichst hohen Wirkungsgrad zu erreichen, werden an die in der Turbine verwendeten Materialien sehr hohe Ansprüche gestellt, insbesondere was deren Temperatur- und Korrosionsbeständigkeit angeht. Die Gase in den Turbinen sind sehr heiß, sehr aggressiv und besitzen ein großes Korrosionspotential. Daher müssen spezielle Legierungen und Stähle für die Turbine bzw. deren Turbinenschaufel verwendet werden, um z.B. Spannungsrisskorrosion zu verhindern oder zumindest zu vermindern. Eine weitere Möglichkeit, Spannungsrisskorrosion der Materialien in der Turbine zu vermindern und damit die Lebensdauer der Turbine zu erhöhen, besteht in der Auswahl geeigneter Beschichtung für die Turbinenschaufeln. Als vorteilhaft haben sich hier Legierungen aus Chrom-Aluminium-Yttrium mit Cobalt, Nickel oder Eisen (MCrAlY-Legierung) oder Chromcarbid (Cr₂C₃) in Verbindung mit Chrom und Nickel herausgestellt.

Wichtig bei diesen Beschichtungsmaterialen ist eine möglichst geringe Duktilität und eine hohe Zähigkeit des Materials, insbesondere an den rotierenden Turbinenschaufeln, um ein Ablösen der Beschichtung von den Turbinenschaufeln zu verhindern. Sollte die Beschichtung abgelöst werden, wäre das darunter liegende Material der Turbinenschaufeln den aggressiven Gasen mehr oder weniger ungeschützt ausgesetzt. Das Material der Turbinenschaufeln würde somit leicht durch Spannungsrisskorrosion beschädigt werden. Zudem würden Unebenheiten auf der Oberfläche einen optimalen Strömungsverlauf nicht mehr gewährleisten. Damit geht ein unerwünschter Verlust an Wirkungsgrad einher.

Während des Betriebs treten in Gas- und Dampfturbinen systembedingt sehr hohe Temperaturen im Bereich von 800 bis 1500°C in Gasturbinen und im Bereich von 400 bis 600°C in Dampfturbinen auf. Diese Temperaturen bestimmen wesentlich den Wirkungsgrad der Turbine. Bereits eine Abweichung von wenigen Grad kann einen signifikant geringeren Wirkungsgrad im Bereich einiger Prozent bedeuten. Die Temperatur ist jedoch nicht nur für den Wirkungsgrad maßgeblich, sondern bestimmt auch das Korrosionspotential des Gases sowie die Duktilität und Zähigkeit der Beschichtung. Die Materialeigenschaften der verwendeten Beschichtung sind daher zumeist für einen gewissen vorgegebenen Temperaturbereich optimiert. In diesem Temperaturbereich kann ein sicherer Betrieb der Turbine gewährleistet werden, ohne dass die Materialien der Turbine und insbesondere die Beschichtungen der Turbinenschaufeln Schaden nehmen. Das Überschreiten, insbesondere das dauerhafte Überschreiten einer Grenztemperatur kann die Turbine dauerhaft schädigen. Dies gilt es zu verhindern. Deshalb ist es wichtig zu wissen, ob die Turbine oberhalb eines vorgegebenen Temperaturbereichs betrieben wurde.

Hierzu sind mehrere Verfahren zur Temperaturmessung bei Turbinen bekannt.

Beispielsweise sind in der DE 197 36 276 verschiedene Methoden zur Temperaturmessung beschrieben. Die zugrunde liegenden physikalischen Messprinzipien beruhen u.a. auf der Temperaturabhängigkeit eines elektrischen Widerstands, des Seebeck-Effektes (Thermoelement), einer Farbreaktion (Thermofarbe), der temperaturabhängigen Schallgeschwindigkeit in Gasen oder der spektralen Verteilung gestreuter oder emittierter elektromagnetischer Wärmestrahlung.

Temperatursensoren für Turbinen müssen extremen Einsatzbedingungen hinsichtlich Temperatur, Druck und Vibration standhalten. Herkömmliche Thermoelemente altern unter diesen extremen Einsatzbedingungen sehr schnell. Zudem soll die Temperatur häufig auch an rotierenden Teilen gemessen werden, was meist nur mit sehr aufwändiger Telemetrie möglich ist. Der Einsatz von Thermofarben ist bisher nur auf experimentelle Untersuchungen beschränkt und daher noch nicht ausreichend verlässlich für den oben genannten Betrieb in Turbinen. Aktive Lasermessverfahren, wie z.B. Rayleigh-Streuung oder CARS (Coherent Antistokes Raman Scattering), sind zwar berührungslos, aber technisch außerordentlich aufwändig und schwierig zu implementieren.

Gemäß der EP 1 645 538 A1 ist eine Materialzusammensetzung für das Herstellen einer Beschichtung bekannt, wobei das Matrixmaterial der Materialzusammensetzung insbesondere glaskeramische Grundeigenschaften aufweist. In das Matrixmaterial sind als Füllmaterial Nanopartikel mit einer Partikelgröße ≤ 1 µm eingebettet.

Gemäß der DE 25 34 668 ist es bekannt, so genannte thermographische Farben auf keramischen Körpern zu verwenden, welche zur Bestimmung von Temperaturverhältnissen auf der Oberfläche beispielsweise in Öfen Verwendung finden. Das Überschreiten einer bestimmten, durch die Eigenschaften der thermographischen Farbe definierten Temperatur lässt sich durch einen Farbumschlag der thermographischen Beschichtung nachweisen.

Gemäß der DE 195 37 999 A1 können derartige thermographische Farben auch auf die Oberfläche von thermisch stark beanspruchten Bauteilen einer Gasturbine aufgetragen werden, um eine Analyse der vorliegenden Temperaturverhältnisse im Entwicklungsstadium zu ermöglichen. Ein Farbumschlag beispielsweise während des Betriebes kann mittels einer digitalen Kamera aufgenommen werden und lässt Rückschlüsse auf das beanspruchungsabhängige Temperaturprofil in der Turbine zu.

Es besteht daher der Bedarf an einer einfachen Möglichkeit, eine Temperatur bzw. das Überschreiten einer bestimmten Grenztemperatur in der Turbine direkt bestimmen zu können. Von besonderem Interesse ist in diesem Zusammenhang auch, die Temperatur direkt an der Oberfläche der zu untersuchenden Materialien, d.h. in der Beschichtung der Materialien, zu messen.

Vor diesem Hintergrund liegt der vorliegenden Erfindung die Aufgabe zu Grunde, eine bessere und insbesondere eine möglichst einfache Bestimmung der Temperatur einer Beschichtung auf einem Substrat zu ermöglichen.

Erfindungsgemäß wird zumindest eine dieser Aufgaben durch ein Substrat mit den Merkmalen des Patentanspruchs 1, durch eine Turbine mit den Merkmalen des Patentanspruchs 9, und/oder durch ein Verfahren gemäß Patentanspruch 11 gelöst. Dementsprechend ist gemäß einem ersten Aspekt ein Substrat mit einer aufgebrachten Beschichtung vorgesehen, die eine Beschichtungsmatrix enthält, in deren Matrixstruktur Multilayernanopartikel und/oder gekapselte Nanopartikel angeordnet sind, die bei erstmaligem Überschreiten einer Grenztemperatur einen Farbstoff freisetzen und/oder eine Farbreaktion auslösen, welche eine irreversible Farbänderung der Beschichtung hervorruft.

Gemäß einem weiteren Aspekt der vorliegenden Erfindung ist ein Verfahren zur Herstellung eines Substrates mit einer aufgebrachten Beschichtung mit folgenden Schritten vorgesehen:
a) Bereitstellen eines Substrates;
b) Bereitstellen eines Elektrolysebades mit darin suspendierten Nanopartikeln;
c) Einbringen des Substrates in das Elektrolysebad zum Abscheiden einer ersten Beschichtung mit darin enthaltenen Nanopartikeln auf einer Oberfläche des Substrates.

Die der vorliegenden Erfindung zugrunde liegende Idee besteht darin, dass bei Überschreiten einer Grenztemperatur Multilayer- und/oder gekapselte Nanopartikel, die in eine Beschichtung eingebracht wurden, eine irreversible Farbänderung der Beschichtung hervorrufen. Die Farbänderung der Beschichtung kann durch Freisetzen eines inerten Farbpartikels bzw. Farbpigmentes aus dem Nanopartikel durch Schmelzen der Verkapselung des Nanopartikels hervorgerufen werden. Alternativ kann die Farbänderung durch Umsetzung von Metallen, die innerhalb des verkapselten Nanopartikels vorliegen und die durch Schmelzen der Verkapselung freigesetzt werden, hervorgerufen werden, indem das frei gesetzte Metall mit beispielsweise Metallen der Verkapselung und/oder Metallen der Beschichtung irreversibel zu einem Farbstoff reagiert. Dabei kann zusätzlich Sauerstoff benötigt werden, der durch die Umgebung bereitgestellt wird.

Vorteilhafte Ausgestaltungen und Weiterbildungen der Erfindung sind Gegenstand der Unteransprüche sowie der Beschreibung unter Bezugnahme auf die Zeichnung.

Gemäß einer bevorzugten Ausgestaltung der Erfindung kommen als Farbpigmente in den Multilayer- und/oder gekapselten Nanopartikeln vornehmlich Metalloxide sowie Metallmischoxide zum Einsatz. Diese werden auch als anorganische Farbstoffe oder Farbpigmente bezeichnet. Derartige Verbindungen zeigen eine ausgezeichnete Temperaturstabilität und sind weitgehend inert. Dies ist insofern wichtig, da die Metalloxide bzw. Farbpigmente nicht in die Materialien der Turbinenblätter selbst eindiffundieren dürfen, da diese sonst in ihrer Zusammensetzung verändert und somit beschädigt werden. Da die Farbpartikel inert gegenüber der Umgebung sind, werden die Materialien der umgebenden Beschichtungsmatrix durch die freigesetzten Farbpartikel nicht bzw. nicht wesentlich verändert oder nicht zerstört.

Die Nanopartikel liegen in einem Anteil in der Beschichtung vor, der die Funktion der Beschichtung nicht stört. Der Anteil der Nanopartikel beträgt vorzugsweise, jedoch nicht notwendigerweise, weniger als 10% bezogen auf die Masse der Beschichtungsmatrix. Bevorzugt beträgt der Anteil im Bereich von 1%-8%, noch bevorzugter im Bereich von 2%-5%.

Die Farbpigmente können beispielsweise
- Chromoxid (Cr₂O₃);
- eine isomorphe Mischung aus Cobaltzinkat (Rinnmanns grün, Co•ZnO);
- Chromoxid-Aluminium-Cobaltoxid (CrO₃-Al-CoO);
- Cobaltchromid (CoCr₂O₄) ;
- Cobalttitanat (Co₂TiO₄) ;
- Viktoria grün Granat (3CaO, Cr₂O₃, 3SiO₂) bzw. dessen Modifikationen durch Al₂O₃, B₂O₃, CaF₂, CoO oder ZrO₂;
- Cobaltaluminat (Tenatsblau, CoO•Al₂O₃);
- Cobaltstannat (CoO•SnO₂);
- Zirkonvanadin (Zirkonblau, (Zr,V)SiO₄);
- Cobaltzinkaluminat ((Co,Zn)Al₂O₄);
- Cobaltsilikat (Co₂SiO₄) ;
- Cobaltzinksilikat ((Co,Zn)SiO₄) sowie dessen Modifikation durch B₂O₃;
- Strontiumchromat (SrCrO₄);
- Chrom-Titangelb (Titanoxid mit Nickeloxid-Antimonoxid-Chromoxid (Ti, Ni, Sb, Cr) O₂) ;
- Nickel-Barium-Titan-Priderit;
- Zinnvanadin ((Sn,V)O₂);
- Zirkonpraseodym ((Zr,Pr)SiO₄);
- Zirkonvanadin ((Zr,V)O₂);
- Nickel-Niob-Titangelb-Rutil ((Ti,Ni,Nb)O₂) und dessen Modifikation durch Cr₂O₃ oder SrO;
- Chrom-Niob-Titan-Rutil ((Ti,Cr,Nb)O₂) und dessen Modifikation durch NiO oder SrO;
- Chrom-Wolfram-Titan-Rutil;
- Zinkchromat (ZnCrO₄);
- Aluminiumsilikat mit Eisenoxid;
- Eisenoxid (Fe₂O₃) ;
- Eisensilikat (Fe₂O₃•SiO₂);
- Chromstannat (Cr₂(SnO₃)₃) ;
- Zinkeisenoxid (ZnFe₂O₄) ;
- Goldaluminiumkorund (Al₂O₃ und Au) und dessen Modifikation durch Ag₂SiO₄ oder Ton;
- Chromaluminiumkorund ((Al,Cr)₂O₃) und dessen Modifikation durch ZnO;
- Manganaluminiumkorund ((Al,Mn)₂O₃) und dessen Modifikation durch P₂O₅;
- Zirkoneisenzirkon ((Zr,Fe)SiO₄);
- Chromzinnsphen (CaO,SnO₂,SiO₂,Cr₂O₃) und dessen Modifikation durch B₂O₃ oder PbO;
- Chromaluminiumspinell (Zn(Al,Cr)₂O₄) und dessen Modifikation durch B₂O₃, Fe₂O₃, MgO oder PbO;
- Chromzinncassiterit ((Sn,Cr)O₃) und dessen Modifikation durch B₂O₃, Ca oder CeO₂; und/oder
- Kalziumaluminiumsilikat (Ca₃Al₂(SiO₄)₃) enthalten.

Die oben genannten Farbstoffe ebenso wie andere Farbstoffe können durch Reaktion eines Metalls, das als gekapseltes Nanopartikel bei Überschreiten einer Grenztemperatur freigesetzt wird, mit einem Metall, das in der Legierung der Beschichtung vorliegt, reagieren. Beispielsweise können derartige Beschichtungen aus einer Legierung der Form MCrAlY, wobei M Co, Ni, Co+Ni, Fe sein können, aufgebaut sein. Es ist ebenso möglich, dass eine Reaktion durch Umsetzung der metallischen Verkapselung mit dem gekapselten Metall und mindestens einem Element der Beschichtung die Bildung des Farbstoffes auslöst. Hierbei sind vielfältige Variationen der unterschiedlichen Reaktionspartner denkbar. Allen Reaktionen ist jedoch gemein, dass ein Farbstoff gebildet wird, wobei Metalle zu deren Bildung beitragen.

Metallische Verkapselungen können ebenfalls für die Kapselung von Nanopartikeln verwendet werden. Hierbei kommen insbesondere Lotmetalle zum Einsatz. Beispielhaft können hier Zinn sowie eutektische Gemische des Zinns mit Kupfer, Silber, Blei und Indium genannt werden. Es kann jedoch auch jedes andere Metall allein oder in Form einer Legierung, verwendet werden, das in einem gewünschten Temperaturbereich schmilzt. Durch das Schmelzen der metallischen Verkapselung des Nanopartikels wird das Nanopartikel selbst freigesetzt. Bevorzugt wird eine metallische Legierung verwendet, wenn Metalle als Nanopartikel gekapselt werden, die durch Umsetzung mit der Beschichtung und/oder der metallischen Verkapselung einen Farbstoff bilden.

Bei der Bildung eines Farbstoffes kann zusätzlich Sauerstoff aus der Umgebung benötigt werden. Die verkapselten Metalle können direkt durch Aussetzen gegenüber Sauerstoff zu einem entsprechenden Oxid oder Mischoxid reagieren, das die Farbänderung hervorruft. Es ist jedoch auch möglich, dass die verkapselten Metalle mit mindestens einem Element der Beschichtungslegierung und/oder der metallischen Verkapselung reagieren, wobei zusätzlich Sauerstoff benötigt werden kann. Weiterhin können direkt Metalloxide eingesetzt werden, die mit mindestens einem Element der Beschichtungslegierung beispielsweise zu einem anderen Metallmischoxid reagieren können.

Metallische Nanopartikel können zum Anmeldezeitpunkt der vorliegenden Patentanmeldung beispielsweise von der Firma QINETIQ^{®} Nanoparticles Ltd. bezogen werden. Multilayer- oder gekapselte Nanopartikel, die nach der LBL-Technologie^{®} hergestellt wurden, können von der Firma Capsolution Nanoscience AG in Berlin bezogen werden.

Da Gas- und Dampfturbinen üblicherweise in einem Temperaturbereich von etwa 500 bis 700°C betrieben werden, geben die Verkapselungen die Nanopartikel bei Überschreiten einer Grenztemperatur etwa im Bereich von 400 bis 800°C frei. Die Empfindlichkeit der Freisetzung gegenüber der Temperatur ist je nach Verkapselung unterschiedlich. Eutektische Gemische besitzen beispielsweise einen definierten, sehr exakten Schmelzpunkt. Daher geben metallische Verkapselungen, die beispielsweise ein Lotmetall als Verkapselung verwenden, die Nanopartikel bei einer vorgegebenen Temperatur innerhalb eines sehr kleinen Temperaturbereichs frei. Bei hochschmelzenden Kunststoffverkapselungen werden die Nanopartikel in einem Intervall von etwa ± 10-50°C um die Grenztemperatur abgegeben.

Der Zeitraum der Überschreitung einer Grenztemperatur beträgt bei Gas- und Dampfturbinen üblicherweise mehrere Stunden oder gar Tage. Daher können die Nanopartikel derart ausgelegt werden, dass die Verkapselung nur nach Aussetzen gegenüber einer Grenztemperatur über einen längeren Zeitraum frei gegeben werden. Die Reaktionen zur Bildung der Farbpigmente verlaufen üblicherweise innerhalb weniger Minuten oder Sekunden. Freigesetzte Farbstoffe sind direkt nach dem Aufbrechen der Verkapselung sichtbar, sofern sie an der Oberfläche der Beschichtung eingebracht wurden. Da es sich bei den Farbstoffen um inerte Farbstoffe handelt, liegen diese auch nach längerer Zeit unverändert vor.

Die Nanopartikel können auf die Oberfläche oder nahe der 0-berfläche einer Turbinenschaufel angebracht werden. Somit ist es möglich, das Überschreiten einer Grenztemperatur visuell durch Änderung der Farbe der Beschichtung festzustellen. Ebenso ist es möglich, die Nanopartikel in tiefer liegende Schichten der Beschichtung einzubringen, wodurch ein von außen unsichtbarer Indikator innerhalb der Turbinenblätter eingebracht wird. Bei einer Überprüfung der Turbinenblätter kann somit im Nachhinein festgestellt werden, ob die Turbine oberhalb einer gewissen Grenztemperatur betrieben wurde. Eine solche Überprüfung erfordert das Abtragen der obersten Schichten der Beschichtung, bis die Beschichtung mit den eingebrachten Nanopartikeln sichtbar wird. Alternativ kann ein Querschnitt des Turbinenblattes erstellt werden, der die Farbänderung in der Beschichtung offenbart.

Solche Beschichtungen werden bevorzugt bei GuD-Turbinen eingesetzt. Dabei kann jede Turbinenschaufel eine mit verkapselten Nanopartikeln versehene Beschichtung aufweisen. Die Beschichtung, die verkapselte Nanopartikel aufweist, kann auch durch mindestens eine weitere Beschichtung geschützt sein. Die Erfindung wird nachfolgend anhand der in den schematischen Figuren der Zeichnung angegebenen Ausführungsbeispiele näher erläutert. Es zeigt dabei:
- Figur 1a-b: schematische Querschnitte zur Darstellung eines ersten Ausführungsbeispiels des erfindungsgemäßen Verfahrens zum Aufbringen einer Beschichtung auf ein Substrat;
- Figur 2: einen Querschnitt für den Aufbau eines gekapselten Nanopartikels;
- Figur 3a-b: schematische Querschnitte zur Darstellung eines weiteren Ausführungsbeispiels des erfindungsgemäßen Verfahrens zum Aufbringen einer Beschichtung auf ein Substrat;

- Figur 4a-c: schematische Querschnitte zur Darstellung eines weiteren Ausführungsbeispiels des erfindungsgemäßen Verfahrens zum Aufbringen einer Beschichtung auf ein Substrat;

In allen Figuren der Zeichnung sind gleiche und funktionsgleiche Elemente - sofern nichts Anderes angegeben ist - mit denselben Bezugszeichen versehen worden.

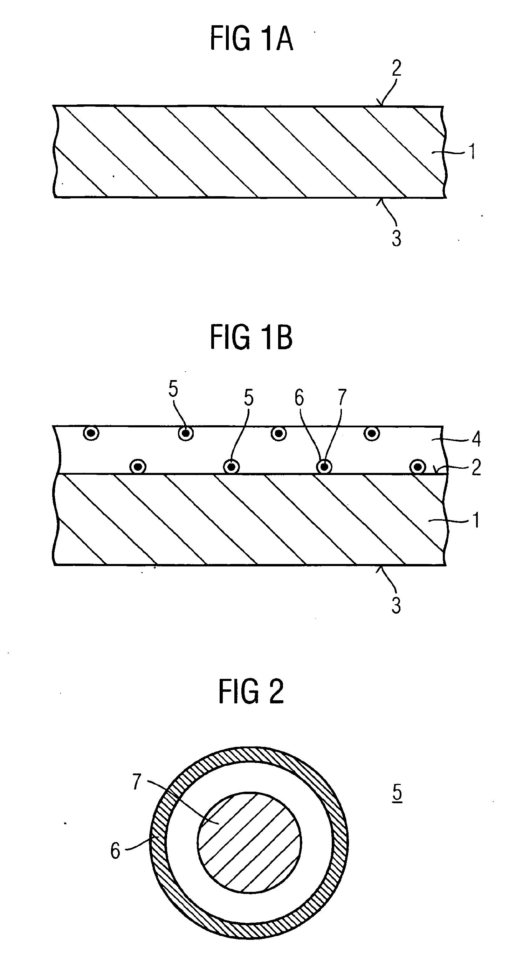

Figur 1 zeigt in den Teilfiguren 1a und 1b schematische Querschnitte zur Darstellung eines ersten Ausführungsbeispiels des erfindungsgemäßen Verfahrens zum Aufbringen einer Beschichtung auf ein Substrat.

Bei dem Verfahren wird ein Substrat 1 mit einer vorderseitigen ersten Oberfläche 2 und einer rückwärtigen zweiten Oberfläche 3 (Figur 1a). Das Substrat kann beispielsweise Teil einer Turbinenschaufel sein, z.B. ein geeigneter Stahl.

Auf dieses Substrat wird auf der vorderseitigen ersten Oberfläche 2 eine Beschichtung mit einer Beschichtungsmatrix 4 aufgebracht, in der verkapselte Nanopartikel 5 eingebracht sind (Figur 1b). Ein verkapseltes Nanopartikel 5 besteht aus einem Nanopartikel 7, das mit einer Verkapselung 6 umgeben ist. Das Aufbringen der Beschichtung, die eine Matrix für die verkapselten Nanopartikel 5 bildet, erfolgt beispielsweise elektrolytisch. Dabei werden verkapselte Nanopartikel 5 in der Elektrolytflüssigkeit dispergiert. Beim elektrolytischen Abscheiden der Beschichtungsmatrix 4 werden die verkapselte Nanopartikel 5 in die Beschichtungsmatrix 4 integriert. Eine auf das Substrat auf der ersten Oberfläche 2 aufgebrachte Beschichtungsmatrix 4 mit verkapselten Nanopartikeln 5 ist in Figur 1b gezeigt.

Figur 2 zeigt einen beispielhaften Querschnitt eines verkapselten Nanopartikels 5. Das Nanopartikel 7 wird dabei von einer Verkapselung 6 umhüllt. Das Nanopartikel 7 kann beispielsweise ein Farbpigment oder ein Metallnanopartikel darstellen. Als Metalle kommen alle Metalle in Betracht, die zusammen mit Sauerstoff und/oder Bestandteilen der Beschichtungsmatrix 4 und/oder der Verkapselung 6 reagieren können, um einen Farbstoff zu bilden. Als Farbstoffe kommen alle Farbstoffe in Betracht, die inert gegenüber erhöhten Temperaturen sind. Insbesondere kommen Farbstoffe zur Verwendung, die sich bei Temperaturen oberhalb einer Grenztemperatur von z.B. 500°, bevorzugt oberhalb von 700° nicht zersetzen oder umwandeln.

Das Nanopartikel 7 könnte beispielsweise ein Mn-Metall Nanopartikel sein. Bei Freisetzung des Mn-Metalls reagiert dieses mit dem Aluminium der MCrAlY-Beschichtung und Sauerstoff zu Manganaluminiumkorund (Mn,Al)₂O₃ und bewirkt somit eine rote Verfärbung der Beschichtung.

Das Nanopartikel 7 könnte auch ein MnO Nanopartikel sein. Bei Aufbrechen der Verkapselung 6 wird das Manganoxid freigesetzt und kann mit dem Aluminium der MCrAlY-Beschichtung und Sauerstoff zu Manganaluminiumkorund (Mn,Al)₂O₃ reagieren.

Alternativ könnte das Nanopartikel 7 auch ein Co-Metall Nanopartikel sein. Bei Freisetzung des Cobalts aus dem verkapselten Nanopartikel 5 reagiert dieses mit Sauerstoff der Umgebung und bewirkt eine Blaufärbung der Beschichtung.

Als Beispiel für einen Farbstoff könnte das gekapselte Nanopartikel 5 gekapseltes Manganaluminiumkorund (Mn,Al)₂O₃ sein. Bei Freisetzung des Manganaluminiumkorund bewirkt dieses eine rote Verfärbung der Beschichtung.

Die Verkapselung 6 kann einen hochschmelzenden Kunststoff oder ein Metall oder eine Legierung enthalten. Der hochschmelzenden Kunststoff bzw. das Metall oder die Legierung schmelzen bevorzugt in einem Temperaturbereich, der der Grenztemperatur entspricht. Als Metall sollen auch Metallegierungen verstanden werden. Bevorzugt werden hier für die Verkapselung 6 eutektische Gemische, wie z. B. Lotmetalle, verwendet. Derartige eutektische Gemische schmelzen definiert bei einer gegebenen Temperatur und erlauben so die Freisetzung der gekapselten Nanopartikel bei Überschreiten einer gegebenen Grenztemperatur. Als Lotmetalle können beispielsweise Zinnlegierungen mit Kupfer, Silber oder Blei verwendet werden.

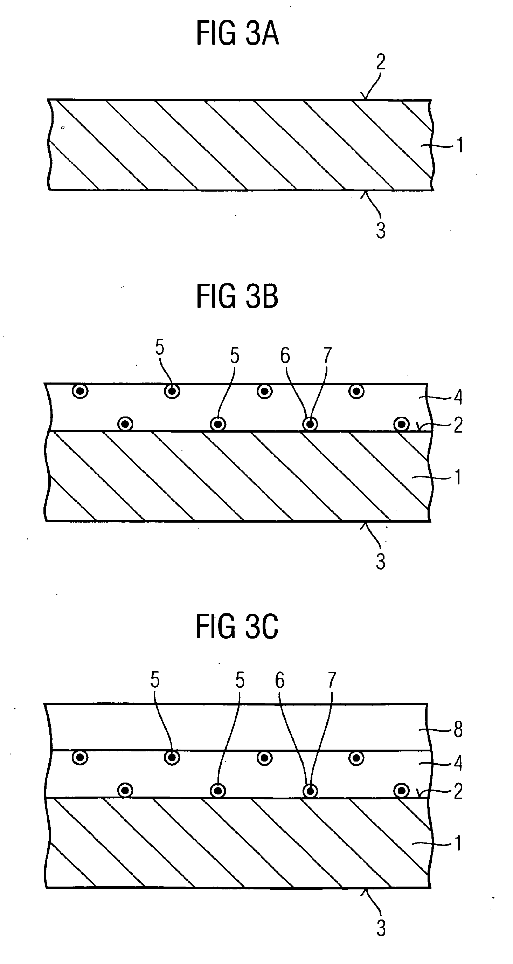

Figur 3 zeigt in den Teilfiguren 3a bis 3c schematische Querschnitte zur Darstellung eines weiteren Ausführungsbeispiels des erfindungsgemäßen Verfahrens zum Aufbringen einer Beschichtung auf ein Substrat.

Im Unterschied zu dem ersten Ausführungsbeispiel aus Figur 1 ist hier auf der mit verkapselten Nanopartikeln 5 versehenen Beschichtungsmatrix 4 ist eine weitere Beschichtung 8 aufgebracht. Die Beschichtung 8 kann beispielsweise elektrolytisch abgeschieden werden. Diese Anordnung ist im Querschnitt in Figur 3c dargestellt.

Es ist auch denkbar, weitere Schichten mit oder ohne verkapselte Nanopartikel auf das Substrat aufzubringen. Dabei ist es auch möglich, verkapselte Nanopartikel 5 mit unterschiedlichen Eigenschaften, die beispielsweise bei unterschiedlichen Temperaturen den Farbumschlag hervorrufen, in die Beschichtungsmatrix 4 einzubringen.

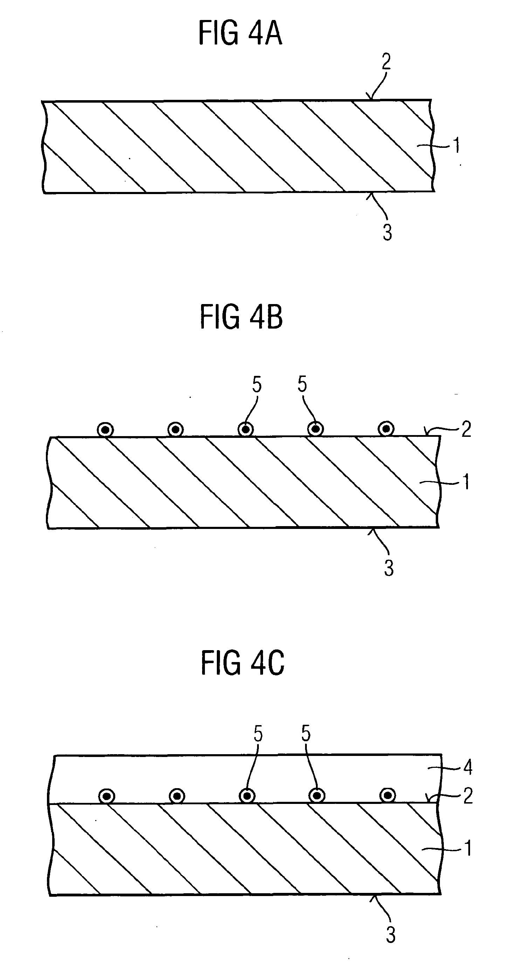

Figur 4 zeigt in den Teilfiguren 4a bis c schematische Querschnitte zur Darstellung eines weiteren Ausführungsbeispiels des erfindungsgemäßen Verfahrens zum Aufbringen einer Beschichtung auf ein Substrat.

Gemäß Figur 4a wird zunächst ein Substrat 1 mit einer vorderseitigen ersten Oberfläche 2 und einer rückwärtigen zweiten Oberfläche 3 bereitgestellt.

Auf dieses Substrat 1 werden auf der ersten Oberfläche 2 einzelne verkapselte Nanopartikel 5 aufgetragen. Einen Querschnitt eines Substrates 1 mit darauf aufgebrachten verkapselten Nanopartikeln 5 zeigt Figur 4b.

Die verkapselten Nanopartikel 5 werden anschließend von einer Beschichtungsmatrix 4 bedeckt. Figur 4c zeigt eine auf die erste Oberfläche 2 des Substrates 1 und die gekapselten Nanopartikel 5 aufgebrachte Beschichtungsmatrix 4.

Die verkapselten Nanopartikel 5 enthalten beispielsweise (Al,Mn)₂O₃, das bei Aufbrechen der Verkapselung eine Rotfärbung auslöst.

Das verkapselte Nanopartikel 5 kann auch Cobalt enthalten, das bei Freisetzung mit Sauerstoff der Umgebung Oxide ausbildet, die zu einer Blaufärbung führen.

Das verkapselte Nanopartikel 5 kann aber auch Mangan bzw. Manganoxid enthalten, das mit dem Aluminium der MCrAlY Beschichtung und wahlweise Sauerstoff aus der Umgebung zu (Al,Mn)₂O₃ reagiert, das zu einer Rotfärbung führt.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

So sei die Erfindung nicht auf den in den vorstehenden Figuren dargestellten, speziellen Aufbau der Beschichtung oder der Nanopartikel beschränkt. Vielmehr können eben diese Nanopartikel auf beliebige Art und Weise modifiziert werden, ohne dass vom grundlegenden Prinzip der Erfindung abgewichen wird. Insbesondere kann das verkapselte Nanopartikel unterschiedliche Farbstoffe oder Metalle enthalten. Es ist auch denkbar, dass verkapselte Nanopartikel mit unterschiedlichen Verkapselungen und unterschiedlichen Farbstoffen und/oder Metallen in die Beschichtung eingebracht werden, um das Überschreiten unterschiedlicher Grenztemperaturen anzuzeigen.

## Patentansprüche

1. Substrat (1) mit einer aufgebrachten Beschichtung, die eine Beschichtungsmatrix (4) enthält, in deren Matrixstruktur Multilayernanopartikel und/oder verkapselte Nanopartikel (5) angeordnet sind, die bei erstmaligem Überschreiten einer Grenztemperatur einen Farbstoff freisetzen und/oder eine Farbreaktion auslösen, welche eine irreversible Farbänderung der Beschichtung hervorruft.

2. Substrat (1) gemäß Anspruch 1,
**dadurch gekennzeichnet,**
**dass** zumindest eines der verkapselten Nanopartikel (5) ein Element enthält, das mit mindestens einem Element der Beschichtungsmatrix (4) bei erstmaligem Überschreiten der Grenztemperatur die Farbreaktion auslöst.

3. Substrat (1) gemäß mindestens einem der vorhergehenden Ansprüche,
**dadurch gekennzeichnet,**
**dass** zumindest eines der Nanopartikel (7) mit einem hochschmelzenden Kunststoff und/oder einer metallischen Verkapselung (6) verkapselt ist, der/die erst bei hohen Temperaturen, die der Grenztemperatur entsprechen, schmilzt.

4. Substrat (1) gemäß einem der Ansprüche 1 oder 2,
**dadurch gekennzeichnet,**
**dass** zumindest eines der Nanopartikel (7) mit einem Metall in einer metallischen Verkapselung (6) verkapselt ist, das erst bei hohen Temperaturen, die der Grenztemperatur entsprechen, schmilzt.

5. Substrat (1) gemäß Anspruch 4,
**dadurch gekennzeichnet,**
**dass** die metallische Verkapselung (6) ein Metall enthält; das mit mindestens einem weiteren Element des verkapselten Nanopartikels (5) und/oder mindestens einem Element der Beschichtungsmatrix (4) bei Überschreiten der Grenztemperatur die Farbreaktion auslöst.

6. Substrat (1) gemäß mindestens einem der vorhergehenden Ansprüche,
**dadurch gekennzeichnet,**
**dass** zumindest eines der Nanopartikel (7) ein Element enthält, das mit mindestens einem Element des verkapselten Nanopartikels (5) und/oder mindestens einem Element der Beschichtungsmatrix (4) bei erstmaligem Überschreiten der Grenztemperatur die Farbreaktion auslöst.

7. Substrat (1) gemäß mindestens einem der vorhergehenden Ansprüche,
**dadurch gekennzeichnet,**
**dass** für die Farbänderung ein Farbstoff vorgesehen ist, der ein anorganischer Farbstoff ist.

8. Substrat (1) gemäß mindestens einem der vorhergehenden Ansprüche,
**dadurch gekennzeichnet,**
**dass** das Substrat (1) als Turbinenschaufel oder Teil einer Turbinenschaufel ausgebildet ist.

9. Turbine, insbesondere zur Erzeugung elektrischer Energie, mit einem Turbinengehäuse, in dem innerhalb eines Strömungspfades ein drehbar gelagertes Turbinenrad angebracht ist, wobei das Turbinenrad eine Vielzahl von Turbinenschaufeln aufweist und wobei zumindest eine der Turbinenschaufeln ein Substrat (1) mit aufgebrachter Beschichtung (4) nach wenigstens einem der Ansprüche 1-7 aufweist.

10. Turbine gemäß Anspruch 9,
**dadurch gekennzeichnet,**
**dass** jede Turbinenschaufel das Substrat (1) aufweist.

11. Turbine gemäß Anspruch 9 oder 10,
**dadurch gekennzeichnet,**
**dass** als Turbine eine Gas- und Dampfturbine vorgesehen ist.

12. Verfahren zur Herstellung eines Substrates (1) mit einer aufgebrachten Beschichtung gemäß einem der Ansprüche 1-8 mit den Schritten:
(a) Bereitstellen eines Substrates (1);
(b) Bereitstellen eines Elektrolysebades mit darin suspendierten verkapselten Nanopartikeln (5);
(c) Einbringen des Substrates (1) in das Elektrolysebad zum Abscheiden einer ersten Beschichtung mit darin enthaltenen verkapselten Nanopartikeln (5) auf einer Oberfläche des Substrates (2).

13. Verfahren nach Anspruch 12,
**dadurch gekennzeichnet,**
**dass** nach dem Einbringen des Substrates (1) zumindest eine zweite Beschichtung (8) auf die erste Beschichtung zum Schutz der ersten Beschichtung aufgebracht wird.

## Claims

1. Substrate (1) with an applied coating containing a coating matrix (4) in whose matrix structure multilayer nanoparticles and/or encapsulated nanoparticles (5) are disposed which release a colorant and/or trigger a colour reaction which produces an irreversible colour change in the coating the first time a temperature limit is exceeded.

2. Substrate (1) according to claim 1,
**characterised in that** at least one of the encapsulated nanoparticles (5) contains an element which triggers the colour reaction with at least one element of the coating matrix (4) the first time a temperature limit is exceeded.

3. Substrate (1) according to at least one of the preceding claims,
**characterised in that** at least one of the nanoparticles (7) is encapsulated using a high melting point plastic and/or a metallic encapsulation (6) which only melts at high temperatures corresponding to the temperature limit.

4. Substrate (1) according to one of claims 1 or 2,
**characterised in that** at least one of the nanoparticles (7) is encapsulated in a metallic encapsulation (6) using a metal which only melts at high temperatures corresponding to the temperature limit.

5. Substrate (1) according to claim 4,
**characterised in that** the metallic encapsulation (6) contains a metal which triggers the colour reaction with at least one other element of the encapsulated nanoparticle (5) and/or at least one element of the coating matrix (4) when the limit temperature is exceeded.

6. Substrate (1) according to at least one of the preceding claims,
**characterised in that** at least one of the nanoparticles (7) contains an element which triggers the colour reaction with at least one element of the encapsulated nanoparticle (5) and/or at least one element of the coating matrix (4) the first time the limit temperature is exceeded.

7. Substrate (1) according to at least one of the preceding claims,
**characterised in that** the colorant provided for the colour change is an inorganic colorant.

8. Substrate (1) according to at least one of the preceding claims,
**characterised in that** the substrate (1) is a turbine blade or part of a turbine blade.

9. Turbine, particularly for producing electric power, comprising a turbine casing in which a turbine rotor is mounted within a flow path, the turbine rotor having a plurality of turbine blades and at least one of the turbine blades having a substrate (1) with applied coating (4) according to at least one of claims 1-7.

10. Turbine according to claim 9,
**characterised in that** each turbine blade has the substrate (1).

11. Turbine according to claim 9 or 10,
**characterised in that** the turbine is a combined cycle gas turbine.

12. Method for producing a substrate (1) with an applied coating according to one of claims 1-8, comprising the following steps:
a) preparing a substrate (1);
b) preparing an electrolytic bath with encapsulated nanoparticles (5) suspended therein;
c) inserting the substrate (1) in the electrolytic bath for depositing a first coating with encapsulated nanoparticles (5) contained therein on a surface (2) of the substrate.

13. Method according to claim 12,
**characterised in that** after insertion of the substrate (1) at least one second coating (8) is applied to the first coating to protect said first coating.

## Revendications

1. Substrat ayant un revêtement déposé contenant une matrice ( 4 ) de revêtement, dans la structure de matrice duquel sont disposées des nanoparticules en multicouches et/ou des nanoparticules ( 5 ) enrobées qui, lorsqu'une température limite est dépassée pour la première fois, libèrent un colorant et/ou déclenchent une réaction colorée, qui provoque une modification de couleur irréversible du revêtement.

2. Substrat ( 1 ) suivant la revendication 1,
**caractérisé**
**en ce qu'**au moins l'une des nanoparticules ( 5 ) enrobées contient un élément qui déclenche, avec au moins un élément de la matrice ( 4 ) de revêtement, la réaction colorée, lorsque la température limite est dépassée pour la première fois.

3. Substrat ( 1 ) suivant au moins l'une des revendications précédentes,
**caractérisé**
**en ce qu'**au moins l'une des nanoparticules ( 7 ) est enrobée d'une matière plastique à haut point de fusion et/ou d'un enrobage ( 6 ) métallique qui fond seulement à des températures hautes, qui correspondent à la température limite.

4. Substrat ( 1 ) suivant l'une des revendications 1 ou 2,
**caractérisé**
**en ce qu'**au moins l'une des nanoparticules ( 7 ) est enrobée d'un métal en un enrobage ( 6 ) métallique qui fond à des températures hautes, qui correspondent à la température limite.

5. Substrat ( 1 ) suivant la revendication 4,
**caractérisé**
**en ce que** l'enrobage ( 6 ) métallique contient un métal qui déclenche, avec au moins un autre élément de la nanoparticule ( 5 ) enrobée et/ou au moins un élément de la matrice ( 4 ) de revêtement, la réaction colorée, lorsque la température limite est dépassée.

6. Substrat ( 1 ) suivant au moins l'une des revendications précédentes,
**caractérisé**
**en ce qu'**au moins l'une des nanoparticules ( 7 ) contient un élément qui déclenche, avec au moins un élément de la nanoparticule ( 5 ) enrobée et/ou avec au moins un élément de la matrice ( 4 ) de revêtement, la réaction colorée, lorsque la température limite est dépassée pour la première fois.

7. Substrat ( 1 ) suivant au moins l'une des revendications précédentes,
**caractérisé**
**en ce qu'**il est prévu pour la variation de couleur un colorant qui est un colorant minéral.

8. Substrat ( 1 ) suivant au moins l'une des revendications précédentes,
**caractérisé**
**en ce que** le substrat ( 1 ) est constitué sous la forme d'une aube de turbine ou d'une partie d'une aube de turbine.

9. Turbine, notamment pour la production d'énergie électrique, comprenant un carter de turbine, dans lequel est monté à l'intérieur d'un trajet d'écoulement une roue de turbine montée tournante, la roue de turbine ayant une pluralité d'aubes de turbine et au moins l'une des aubes de turbine ayant un substrat ( 1 ) ayant un revêtement ( 4 ) déposé suivant au moins l'une des revendications 1 à 7.

10. Turbine suivant la revendication 9,
**caractérisée**
**en ce que** chaque aube de turbine a le substrat ( 1 ).

11. Turbine suivant la revendication 9 ou 10,
**caractérisée**
**en ce qu'**il est prévu comme turbine une turbine à gaz et une turbine à vapeur.

12. Procédé de production d'un substrat ( 1 ) ayant un revêtement déposé suivant l'une des revendications 1 à 8, comprenant les stades dans lesquels :
(a) on se procure un substrat ( 1 ) ;
(b) on se procure un bain d'électrolyse ayant des nanoparticules ( 5 ) enrobées en suspension en son sein ;
(c) on introduit le substrat ( 1 ) dans le bain d'électrolyse pour le dépôt d'un premier revêtement ayant des nanoparticules ( 5 ) enrobées contenues en son sein sur une surface du substrat ( 2 ).

13. Procédé suivant la revendication 12,
**caractérisé**
**en ce qu'**après l'introduction du substrat ( 1 ), on dépose, au moins pour la protection du premier revêtement, au moins un deuxième revêtement ( 8 ) sur le premier revêtement.
